# EUROPÄISCHE PATENTSCHRIFT

(11) **EP 2 483 327 B1**
(45) Veröffentlichungstag und Bekanntmachung des Hinweises auf die Patenterteilung: **14.06.2017**
(21) Anmeldenummer: 10757608.4
(22) Anmeldetag: 27.09.2010
(51) Int. Cl.: C08G 65/26, C08G 65/30, C07C 41/34, C08G 18/50

(54) **VERFAHREN ZUR HERSTELLUNG VON AMINOGRUPPENHALTIGEN POLYOLEN**
METHOD FOR PRODUCING POLYOLS THAT CONTAIN AMINO GROUPS
PROCÉDÉ DE PRODUCTION DE POLYOLS CONTENANT DES GROUPES AMINO

(30) Priorität: 29.09.2009 DE 102009043616
(43) Veröffentlichungstag der Anmeldung: 08.08.2012
(73) Patentinhaber: Covestro Deutschland AG, 51373 Leverkusen (DE)
(72) Erfinder: LORENZ, Klaus, 41539 Dormagen (DE); SCHMIDT, Manfred, 41540 Dormagen (DE)
(74) Vertreter: Levpat
(86) Internationale Anmeldenummer: PCT/EP2010/064275
(87) Internationale Veröffentlichungsnummer: WO 2011/039145

(56) Entgegenhaltungen:
- EP-A2- 2 039 713
- WO-A1-93/19113
- WO-A1-98/20061
- WO-A1-2009/106244
- AU-A- 134 766
- US-A- 4 306 943

## Beschreibung

Gegenstand der vorliegenden Erfindung sind über ein einfaches Verfahren erhältliche aminogruppenhaltige Polyole. Unter Polyolen im Sinne der Erfindung sind, soweit nicht explizit spezifiziert, sowohl Polyetherpolyole als auch Polyetheresterpolyole als auch Polyetheresteramidpolyole zu verstehen. Weitere Gegenstände der Erfindung sind das Verfahren zur Herstellung der aminogruppenhaltigen Polyole selbst sowie die Verwendung der erfindungsgemäßen aminogruppenhaltige Polyole zur Herstellung von Polyurethanwerkstoffen.

Zur Herstellung von Polyurethanwerkstoffen wie Weich- oder Hartschaumstoffen bzw. massiven Werkstoffen wie Elastomeren geeignete Polyole werden im Allgemeinen durch Polymerisation geeigneter Alkylenoxide auf polyfunktionelle, d. h. mehrere Zerewitinoff-aktive Wasserstoffatome enthaltende Starterverbindungen erhalten. Für die Durchführung dieser Polymerisationsreaktionen sind seit langem die verschiedensten Verfahren bekannt, die sich zum Teil komplementär ergänzen:
Von großtechnischer Bedeutung ist zum einen die basisch katalysierte Anlagerung von Alkylenoxiden an Starterverbindungen mit Zerewitinoff-aktiven Wasserstoffatomen, zum anderen die gewinnt die Verwendung von Doppelmetallcyanidverbindungen ("DMC-Katalysatoren") für die Durchführung dieser Reaktion zunehmend an Bedeutung. Mit dem Einsatz hochaktiver DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, ist die Polyetherpolyolherstellung bei sehr geringen Katalysatorkonzentrationen (25 ppm oder weniger) möglich, so dass eine Abtrennung des Katalysators aus dem fertigen Produkt nicht mehr erforderlich ist. Diese Katalysatoren sind jedoch für die Herstellung von kurzkettigen Polyolen oder von Polyolen auf Basis aminogruppenhaltiger Starter nicht geeignet. Die seit langem bekannten basischen Katalysatoren, z. B. auf Basis von Alkalimetallhydroxiden, erlauben die problemlose Herstellung kurzkettiger Polyole und/oder von Polyolen auf Basis aminogruppenhaltiger Starter, der Katalysator, d. h. die polymerisationsaktiven Zentren an den Polyetherketten, muss / müssen aber, beispielsweise durch Neutralisation, desaktiviert werden. Entsteht hierbei ein im Polyetherpolyol unlösliches Salz, erfolgt in aller Regel dessen Abtrennung mittels eines separaten Aufarbeitungsschritts, beispielsweise durch Filtration. Speziell im Falle der Herstellung aminogruppenhaltiger Polyole werden hierbei häufig gelb bis gelbbraun gefärbte Produkte erhalten; für bestimmte Anwendungen, z. B. bei Lacken und Beschichtungen, sind gefärbte Ausgangsstoffe nicht erwünscht. Die durch (Lewis-)Säuren katalysierte Polymerisation von Alkylenoxiden ist für aminogruppenhaltige Starterverbindungen von untergeordneter Bedeutung.

Die basisch katalysierte Anlagerung von Alkylenoxiden wie beispielsweise Ethylenoxid oder Propylenoxid an Starterverbindungen mit Zerewitinoff-aktiven Wasserstoffatomen erfolgt, wie bereits erwähnt, in Gegenwart von Alkalimetallhydroxiden, es können aber auch Alkalimetallhydride, Alkalimetallcarboxylate, Erdakalihydroxide oder Amine wie beispielsweise N,N-Dimethylbenzylamin oder Imidazol- bzw. Imidazolderivate eingesetzt werden. Bei aminogruppenhaltigen Startern mit an Stickstoffatome gebundenen Zerewitinoff-aktiven Wasserstoffatomen können bis zu ein mol Propylenoxid pro mol Zerewitinoff-aktiven Wasserstoffatomen unkatalysiert angelagert werden, wird dieses Verhältnis überschritten muss in der Regel einer der oben erwähnten basischen Katalysatoren zugegeben werden. Nach erfolgter Anlagerung der Alkylenoxide müssen die polymerisationsaktiven Zentren an den Polyetherketten desaktiviert werden. Hierfür sind verschiedene Vorgehensweisen möglich. Beispielsweise kann mit verdünnten Mineralsäuren wie Schwefelsäure oder Phosphorsäure neutralisiert werden. Die Stärke der zweiten Dissoziationsstufe der Schwefelsäure reicht zur Neutralisation der durch Hydrolyse der aktiven Alkoholatgruppen entstehenden Alkalimetallhydroxide aus, so dass pro mol eingesetzter Schwefelsäure 2 mol Alkoholatgruppen neutralisiert werden können. Phosphorsäure hingegen muss äquimolar zur Menge der zu neutralisierenden Alkoholatgruppen eingesetzt werden. Die bei der Neutralisation und/oder während der Abdestillation des Wassers entstehenden Salze müssen in der Regel mittels Filtrationsverfahren abgetrennt werden. Destillations- und Filtrationsprozesse sind zeit- und energieintensiv und zudem in manchen Fällen nicht gut reproduzierbar. Es sind daher viele Verfahren entwickelt worden, die ohne Filtrationsschritt und in vielen Fällen auch ohne Destillationsschritt auskommen: Die Neutralisation mit Hydroxycarbonsäuren wie beispielsweise Milchsäure wird in WO-A 98/20061 und US-A 2004167316 für die Aufarbeitung kurzkettiger Polyole für Hartschaumanwendungen beschrieben, es handelt sich hierbei um weitverbreitete und gut etablierte Verfahren. In US-A 4521548 wird beschrieben, wie die polymerisationsaktiven Zentren in ähnlicher Weise durch Umsetzung mit Ameisensäure desaktiviert werden können. Die nach Neutralisation mit Hydroxycarbonsäuren bzw. Ameisensäure entstehenden Metallcarboxylate sind in den Polyetherpolyolen klar löslich. Nachteilig bei diesen Verfahren ist jedoch die für viele Polyurethananwendungen unerwünschte katalytische Aktivität der in den Produkten verbleibenden Salze. In WO-A 04/076529 werden die Polymerisationsreaktionen daher bei niedrigen Katalysatorkonzentrationen von 10 - 1000 ppm KOH durchgeführt, so dass die nach Neutralisation im Polyol verbleibenden katalytisch aktiven Hydroxycarbonsäuresalze ebenfalls in geringer Konzentration vorliegen und somit nachgeschaltete Reaktionen weniger stark stören. In JP-A 10-30023 und US-A 4110268 werden zur Neutralisation aromatische Sulfonsäuren bzw. organische Sulfonsäuren eingesetzt, die ebenfalls in den Polyetherpolyolen lösliche Salze bilden, welche aber weniger basisch sind und sich durch geringe katalytische Aktivität auszeichnen. Ein entscheidender Nachteil sind hier die hohen Kosten der Sulfonsäuren. Das in EP-A 2028211 angewendete Verfahren der Neutralisation von Polyetherpolyolen mit Schwefelsäure verläuft dergestalt, dass verhältnismäßig große Mengen an sauren Schwefelsäuresalzen erhalten werden. Es hat den Nachteil, dass bei Polyetherpolyolen die auf aminogruppenhaltigen Starterverbindungen basieren, Produkte erhalten werden, die für viele Anwendungen zu starke Trübungen aufweisen. Das filtrationsschrittfreie, in WO-A 2009/106244 dargelegte Verfahren der Neutralisation von Polyethern mit monobasischen Säuren erfordert die Gegenwart von mindestens 10 Gew.-% Ethylenoxideinheiten (Oxyethyleneinheiten) in den Polyetherketten, da sonst ebenfalls trübe Produkte erhalten werden. Die Aufarbeitung mittels saurer Kationenaustauscher, wie sie in DE-A 100 24 313 beschrieben ist, erfordert den Einsatz von Lösungsmitteln und deren destillative Abtrennung und ist somit ebenfalls mit hohen Kosten verbunden. Phasentrennverfahren erfordern lediglich einen Hydrolyse-, jedoch keinen Neutralisationsschritt und sind beispielsweise beschrieben in WO 01/14456, JP-A 6-157743, WO 96/20972 und US-A 3823145. Mit dem Einsatz von Koalescern oder Zentrifugen wird die Phasentrennung der Polyetherpolyole von der alkalischen wässrigen Phase unterstützt, oft müssen auch hier Lösungsmittel zugesetzt werden, um den Dichteunterschied zwischen der Polyetherphase und der Wasserphase zu erhöhen. Solche Verfahren sind nicht für alle Polyetherpolyole geeignet, insbesondere versagen sie bei kurzkettigen Polyetherpolyolen oder Polyetherpolyolen mit hohen Ethylenoxidanteilen. Der Einsatz von Lösungsmitteln ist kostenintensiv und Zentrifugen erfordern einen hohen Instandhaltungsaufwand.

Bei aminisch katalysierten Alkylenoxidadditionsreaktionen kann auf eine weitere Aufarbeitung verzichtet werden, sofern die Anwesenheit der Amine in diesen Polyolen die Herstellung von Polyurethanwerkstoffen nicht beeinträchtigt. Über aminische Katalyse können nur Polyole mit verhältnismäßig niedrigen Äquivalentgewichten erhalten werden, siehe hierzu beispielsweise Ionescu et al. in "Advances in Urethane Science & Technology", 1998, 14, S. 151-218 Verfahren zur Herstellung von aminogruppenhaltigen Polyolen werden auch in den Dokumenten EP-A-2039713 und ,WO-A-93/19113 offenbart. Aufgabe der vorliegenden Erfindung war es daher, ein Herstellverfahren für für unter Alkali- oder Erdalkalihydroxid-, -carboxylat oder -hydridkatalyse hergestellte aminogruppenhaltige Polyole zu entwickeln, welches sich durch ein kostengünstiges Aufarbeitungsverfahren auszeichnet und welches die Nachteile der Verfahren des Standes der Technik, erhöhte Trübungswerte und schlechte Eignung zur Herstellung von Isocyanatpräpolymeren, nicht aufweist. Erfindungsziel war demnach ein Herstellverfahren für aminogruppenhaltige Polyole mit geringen Trübungswerten, welche sich zudem zu isocyanatgruppenhaltigen Präpolymeren mit verbesserter Lagerstabilität verarbeiten lassen.

Diese Aufgabe konnte überraschenderweise gelöst werden durch ein Verfahren dadurch gekennzeichnet, dass
(i) Alkylenoxide mit Ausnahme von Ethylenoxid oder maximal 9 Gew.-% Ethylenoxid enthaltende Alkylenoxidgemische an aminogruppenhaltige Starterverbindungen addiert werden in Gegenwart eines Katalysators ausgewählt aus mindestens einem der Gruppe bestehend aus Alkalimetallhydroxid, Alkalimetallhydrid, Erdalkalimetallhydrid, Alkalimetallcarboxylat, Erdalkalimetallcarboxylat und Erdalkalihydroxid,
(ii) anschließend die basischen Katalysatorreste durch Zugabe der stöchiometrischen Menge einer oder mehrerer einbasischer anorganischer Säuren ausgewählt aus Perchlorsäure und/oder Saltpetersäure neutralisiert werden und
(iii) die hierbei entstehenden Salze im resultierenden Polyol belassen werden.

Man erhält nach dieser Vorgehensweise klare Produkte, die überraschenderweise eine geringere Neigung zur Ausbildung von Trübungen aufweisen als entsprechende, mit mehrbasischen Säuren neutralisierte Polyole. Außerdem weisen Isocyanatpräpolymere, die auf Basis der mit einbasischen anorganischen Säuren neutralisierten Polyole durch Umsetzung mit überstöchiometrischen Mengen an Isocyanaten erhalten werden, überraschenderweise bessere Lagerstabilitäten auf als entsprechende Isocyanatpräpolymere auf Basis von mit mehrbasischen Säuren neutralisierten Polyole. Die Methode ist auf lang- und kurzkettige Polyole anwendbar, d. h. der OH-Zahl-Bereich der Endprodukte erstreckt sich von etwa 20 mg KOH/g bis etwa 1.000 mg KOH/g. Die Struktur der Polyetherketten, d. h. die Zusammensetzung der bei der Herstellung der Polyole eingesetzten Alkylenoxide bzw. des Alkylenoxidgemisches, kann im Rahmen der oben definierten Obergrenze von maximal 9 Gew.-% Oxyethylengruppen in den Polyetherketten ebenfalls variiert werden, d. h. die Oxyethylengruppen können blockweise oder statistisch zwischen den anderen Alkylenoxideinheiten angeordnet sein.

Im Einzelnen wird das erfindungsgemäße Verfahren wie folgt durchgeführt:
Die Starterverbindungen werden üblicherweise im Reaktor vorgelegt und ggf. bereits mit dem Katalysator, also dem Alkalimetallhydroxid, Alkali-, Erdalkalimetallhydrid, Alkali-, Erdalkalimetallcarboxylat oder Erdakalihydroxid, versetzt. Bevorzugt werden Alkalimetallhydroxide eingesetzt, besonders bevorzugt ist Kaliumhydroxid. Der Katalysator kann der oder den Starterverbindung(en) als wässrige Lösung oder als Feststoff zugeführt werden. Die auf die Endproduktmenge bezogene Katalysatorkonzentration beträgt bevorzugt 0,004 bis 0,11 Gew.-%, besonders bevorzugt 0,01 bis 0,11 Gew.-%, ganz besonders bevorzugt 0,025 bis 0,11 Gew.-%. Das Lösungswasser und/oder das bei der Reaktion der Starterverbindungen mit dem Katalysator freigesetzte Wasser kann vor Beginn der Dosierung des oder der Alkylenoxide(s) im Vakuum bei erhöhter Temperatur, bevorzugt bei Reaktionstemperatur, entfernt werden, vorausgesetzt, dass die eingesetzten Starterverbindungen einen hinreichend niedrigen Dampfdruck besitzen. Alternativ kann an die aminogruppenhaltigen Starterverbindungen Alkylenoxid zunächst auch katalysatorfrei addiert werden und die Zugabe des Alkalimetallhydroxids sowie der Entwässerungsschritt erst nach Erreichen eines hineichend niedrigen Dampfdrucks der Starterspezies durchgeführt werden. Bei niedrigen Katalysatorkonzentrationen kann auf die Entwässerung auch verzichtet werden.

Als basische Katalysatoren können auch vorgefertigte Alkylenoxid-Additionsprodukte von Zerewitinoff-aktive Wasserstoffatome enthaltenden Starterverbindungen mit Alkoxylatgehalten von 0,05 bis 50 Äquivalenz-% eingesetzt werden ("polymere Alkoxylate"). Unter dem Alkoxylatgehalt des Katalysators ist der durch eine Base durch Deprotonierung entfernte Anteil Zerewitinoff-aktiver Wasserstoffatome an allen ursprünglich im Alkylenoxid-Additionsprodukt des Katalysators vorhanden gewesenen Zerewitinoff-aktiven Wasserstoffatomen zu verstehen. Die Einsatzmenge des polymeren Alkoxylates richtet sich natürlich nach der für die Endproduktmenge angestrebten Katalysatorkonzentration, wie im vorangehenden Abschnitt beschrieben.

An N, O oder S gebundenen Wasserstoff wird als Zerewitinoff-aktiver Wasserstoff (manchmal auch nur als "aktiver Wasserstoff") bezeichnet, wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl-, Amino-, Imino- oder Thiol-Gruppen als funktionelle Gruppen enthalten.

Die als Katalysator verwendbaren polymeren Alkoxylate werden in einem separaten Reaktionsschritt durch Alkylenoxidaddition an Zerewitinoff-aktive Wasserstoffatome enthaltende Starterverbindungen hergestellt. Üblicherweise wird bei der Herstellung des polymeren Alkoxylates ein Alkali- oder Erdalkalimetallhydroxid, z. B. KOH, in Mengen von 0,1 bis 1 Gew.-%, bezogen auf die herzustellende Menge als Katalysator, eingesetzt, das Reaktionsgemisch, falls erforderlich, im Vakuum entwässert, die Alkylenoxidadditionsreaktion unter Inertgasatmosphäre bei 100 bis 170 °C bis zum Erreichen einer OH-Zahl von 150 bis 1.200 mg KOH/g durchgeführt und danach gegebenenfalls durch Zugabe weiteren Alkali- oder Erdalkalimetallhydroxids und anschließendem Entwässern auf die obengenannten Alkoxylatgehalte von 0,05 bis 50 Äquivalenz-% eingestellt. Solchermaßen hergestellte polymere Alkoxylate können separat unter Inertgasatmosphäre gelagert werden. Sie werden im erfindungsgemäßen Verfahren besonders dann bevorzugt verwendet, wenn Einsatzstoffe Verwendung finden, die unter alkalischen Bedingungen hydrolyseempfindlich sind oder die Menge an niedermolekularem Starter bei der Herstellung langkettiger Polyole nicht ausreichend ist, um zu Reaktionsbeginn eine ausreichende Durchmischung bzw. Kühlung des Reaktionsgemisches zu gewährleisten. Die Menge des im erfindungsgemäßen Verfahren eingesetzten polymeren Alkoxylates wird üblicherweise so bemessen, dass sie einer auf die Menge des herzustellenden, erfindungsgemäßen Endproduktes bezogenen Alkali- oder Erdalkalimetallhydroxidkonzentration von bevorzugt 0,004 bis 0,11 Gew.-%, besonders bevorzugt 0,01 bis 0,11 Gew.-%, ganz besonders bevorzugt 0,025 bis 0,11 Gew.-% entspricht. Die polymeren Alkoxylate können natürlich auch als Gemische eingesetzt werden. Die zur Katalyse der Alkylenoxidaddition an aminogruppenhaltige Starterverbindungen einsetzbaren polymeren Alkoxylate können auch auf Basis aminogruppenfreier Starterverbindungen erhalten werden.

Die im Reaktor vorgelegten Starterverbindungen werden nun unter Inertgasatmosphäre bei Temperaturen von 80 - 180 °C, bevorzugt bei 100 - 170 °C mit Alkylenoxiden zur Reaktion gebracht. Die Reaktionstemperatur kann während der Alkylenoxiddosierphase natürlich innerhalb der beschriebenen Grenzen variiert werden: Um eine optimale Abstimmung zwischen hohem Epoxidumsatz und geringer Nebenproduktbildung zu erreichen, können das Alkylenoxid / die Alkylenoxide beispielsweise im Bereich relativ niedriger Molmassen bei hohen Temperaturen, im Bereich hoher Molmassen bei niedrigeren Temperaturen dosiert werden und Nachreaktionen wiederum bei höheren Temperaturen durchgeführt werden. Die Temperatur der exothermen Alkylenoxidadditionsreaktion wird durch Kühlung auf dem gewünschten Niveau gehalten. Gemäß dem Stand der Technik zur Auslegung von Polymerisationsreaktoren für exotherme Reaktionen (z.B. Ullmanns Encyclopedia of Industrial Chemistry, vol B4, Seite 167ff, 5. Auflage, 1992) erfolgt eine solche Kühlung im Allgemeinen über die Reaktorwand (z.B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten-, Rohrbündel- oder Mischerwärmetauschern. Diese sollten so ausgelegt sein, dass auch zu Beginn der Dosierphase, d. h. bei kleinem Füllstand, effektiv gekühlt werden kann.

Generell ist in allen Reaktionsphasen durch Auslegung und Einsatz handelsüblicher Rührorgane für eine gute Durchmischung des Reaktorinhaltes zu sorgen, wobei hier insbesondere ein- oder mehrstufig angeordnete Rührer oder großflächig über die Füllhöhe wirkende Rührertypen geeignet sind (s. z.B. Handbuch Apparate; Vulkan-Verlag Essen, 1. Aufl. (1990), S.188 - 208). Besonders technisch relevant ist hierbei eine im Mittel über den gesamten Reaktorinhalt eingetragene volumenspezifische Mischleistung im Allgemeinen im Bereich von 0,2 bis 5 W/l mit entsprechend höheren volumenspezifischen lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik eine Kombinationen aus Stromstörern (z. B Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch in Abhängigkeit von Füllstand und Alkoxylierungsgrad variiert werden, um in kritischen Reaktionsphasen einen besonders hohen Energieeintrag zu gewährleisten. Alkylenoxidadditionsprodukte auf Basis aminogruppenhaltiger Starterverbindungen durchlaufen beispielsweise häufig ein Viskositätsmaximum wenn ca. 1 mol Alkylenoxid pro mol NH-Wasserstoffe zugegeben worden ist. Es ist dann natürlich von Vorteil, besonders intensiv zu durchmischen. Bevorzugt werden hier bodengängige Rührstufen sowie wandgängige Rührorgane eingesetzt. Ferner sollte die Rührergeometrie zur Minderung des Aufschäumens von Reaktionsprodukten, wie beispielsweise nach Ende der Dosier- und Nachreaktionsphase bei der Abtrennung von Restepoxiden im Vakuum, beitragen. Hierbei haben sich Rührorgane als geeignet herausgestellt, die eine kontinuierliche Durchmischung der Flüssigkeitsoberfläche erzielen. Je nach Anforderung weist die Rührwelle ein Bodenlager und ggf. weitere Stützlager im Behälter auf. Der Antrieb der Rührerwelle kann dabei von oben oder unten erfolgen (mit zentrischer oder exzentrischer Anordnung der Welle).

Alternativ ist es natürlich auch möglich die notwendige Durchmischung ausschließlich über einen über einen Wärmetauscher geführten Umpumpkreislauf zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird.

Generell sind die unterschiedlichsten Reaktortypen für die Durchführung des erfindungsgemäßen Verfahrens geeignet. Im Allgemeinen werden zylinderförmige Behälter eingesetzt, welche ein Höhen- / Durchmesserverhältnis von 1:1 bis 10:1 besitzen. Als Reaktorböden kommen beispielsweise Kugel-, Klöpper-, Flach,- oder Konusböden in Frage.

Die Alkylenoxide werden in der gängigen Weise dem Reaktor kontinuierlich derart zugeführt, dass die sicherheitstechnischen Druckgrenzen des verwendeten Reaktorsystems nicht überschritten werden. Diese richten sich naturgemäß nach den im Einzelfall vorliegenden apparativen Gegebenheiten, bevorzugt wird der Prozess im Allgemeinen in einem Druckbereich zwischen 1 mbar und 10 bar ausgeführt, besonders bevorzugt ist der Druckbereich von 1 mbar bis 4 bar. Das Alkylenoxid / die Alkylenoxide kann / können dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Wird ein Alkylenoxidgemisch dosiert, können die jeweiligen Alkylenoxide dem Reaktor separat oder als Mischung zugeführt werden. Eine Vorvermischung der Alkylenoxide kann beispielsweise durch ein in der gemeinsamen Dosierstrecke befindliches Mischaggregat erreicht werden ("inline-blending"). Es hat sich auch bewährt Alkylenoxide pumpendruckseitig in den Umpumpkreislauf einzeln oder vorgemischt zu dosieren. Für die gute Durchmischung mit dem Reaktionsmedium ist es dann von Vorteil, ein hochscherendes Mischaggregat, in den Alkylenoxid- / Reaktionsmediumstrom zu integrieren.

Soll, wie bereits oben erwähnt, ein gewisser Anteil des Alkylenoxids / der Alkylenoxide zunächst katalysatorfrei addiert werden, so ist die Alkylenoxiddosierung an geeigneter Stelle zu unterbrechen und nach Verstreichen einer angemessenen Nachreaktionszeit der Katalysator zuzusetzen. Nach Ende der, ggf. zweiten, Alkylenoxiddosierphase schließt sich eine (zweite) Nachreaktionsphase an, in der restliches Alkylenoxid abreagiert. Das Ende dieser Nachreaktionsphase ist erreicht, wenn kein weiterer Druckabfall im Reaktionskessel feststellbar ist. Gegebenenfalls können Restepoxidgehalte danach auch noch durch einen Vakuum-, Inertgas- oder Dampfstrippschritt entfernt werden.

Das alkalische Alkylenoxidadditionsprodukt kann nun durch Wasser zunächst hydrolysiert werden. Dieser Hydrolyseschritt ist jedoch für die Durchführung des erfindungsgemäßen Verfahrens nicht essentiell. Die Wassermenge beträgt hierbei bis zu 15 Gew.-%, bezogen auf die Menge des alkalischen Alkylenoxidadditionsproduktes. Die Neutralisation der alkalischen, polymerisationsaktiven Zentren des rohen, gegebenenfalls hydrolysierten Alkylenoxidadditionsproduktes erfolgt sodann durch Zugabe einer stöchiometrischen Menge einer oder mehrerer einbasischer anorganischer Säuren, bevorzugt als verdünnte wässrige Lösung. Die Temperatur bei Hydrolyse und Neutralisation kann in weiten Bereichen variiert werden, Grenzen können hierbei durch die Korrosionsbeständigkeit der Materialien der Neutralisationskessel oder der Polyolzusammensetzung gegeben sein. Sind hydrolyseempfindliche Gruppen, wie beispielsweise Estergruppen, in den Produkten zugegen, kann beispielsweise bei Raumtemperatur neutralisiert werden. In solchen Fällen empfiehlt es sich auch, auf einen vorgeschalteten, separaten Hydrolyseschritt zu verzichten. Nach erfolgter Neutralisation können Wasserspuren, die durch Zugabe verdünnter Säuren eingebracht wurden bzw. überschüssiges Hydrolysewasser im Vakuum entfernt werden. Den Produkten können während oder nach der Neutralisation Alterungsschutzmittel bzw. Antioxidantien zugesetzt werden. Weitere Aufarbeitungsschritte, wie beispielsweise eine Filtration des Produktes, erfolgen nicht.

Geeignete aminogruppenhaltige Starterverbindungen weisen meist Funktionalitäten, zu verstehen als die Zahle der pro Startermolekül vorhandenen Zerewitinoff-aktiven Wasserstoffatome, von 1 bis 4 auf. Bevorzugt enthalten die aminogruppenhaltigen Starterverbindungen wenigstens eine primäre Aminogruppe (-NH₂) und/oder sekundäre Aminogruppe und/oder tertiäre Aminogruppe. Ihre Molmassen betragen von 17 g/mol bis etwa 1.200 g/mol.

Beispiele für aminogruppenhaltige Starterverbindungen sind Ammoniak, Ethanolamin, Diethanolamin, Triethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte. Es können natürlich auch Gemische verschiedener aminogruppenhaltiger Starterverbindungen eingesetzt werden. Ferner können auch Gemische aus aminogruppenhaltigen Startern und aminogruppenfreien Startern eingesetzt werden. Der Gehalt an aminogruppenhaltigen Startern im Startergemisch sollte mindestens 20 mol-% betragen. Beispiele für aminogruppenfreie Starter sind Methanol, Ethanol, 1-Propanol, 2-Propanol und höhere aliphatische Monole, insbesondere Fettalkohole, Phenol, alkylsubstituierte Phenole, Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythrit, Sorbit, Saccharose, Hydrochinon, Brenzcatechin, Resorcin, Bisphenol F, Bisphenol A, 1,3,5-Trihydroxybenzol oder methylolgruppenhaltige Kondensate aus Formaldehyd und Phenol. Außerdem können Melamin oder Harnstoff, sowie Mannichbasen als (Co-)Starter fungieren.

Ferner können dem Prozess auch vorgefertigte Alkylenoxidadditionsprodukte der erwähnten aminogruppenhaltigen bzw. aminogruppenfreien Starterverbindungen, also Polyetherpolyole mit OH-Zahlen von 20 bis 1.000 mg KOH/g, bevorzugt 250 bis 1.000 mg KOH/g, zugesetzt werden. Auch ist es möglich, im erfindungsgemäßen Prozess neben den Starterverbindungen auch Polyesterpolyole mit OH-Zahlen im Bereich von 6 bis 800 mg KOH/g mit dem Ziel der Polyetheresterpolyolherstellung einzusetzen. Hierfür geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen nach bekannten Verfahren hergestellt werden.

Vor dem Hintergrund der Verknappung petrochemischer Ressourcen und der nachteiligen Bewertung fossiler Rohstoffe in Ökobilanzen gewinnt der Einsatz von Rohstoffen aus nachwachsenden Quellen auch bei der Herstellung von für die Polyurethanindustrie geeigneten Polyolen zunehmend an Bedeutung. Das erfindungsgemäße Verfahren eröffnet eine hochwirtschaftliche Möglichkeit zur Herstellung solcher Polyole, indem vor oder während der Addition der Alkylenoxide Triglyceride wie beispielsweise Sojaöl, Rapsöl, Palmkernöl, Palmöl, Leinöl, Sonnenblumenöl, Heringsöl, Sardinenöl, Lesquerellaöl und Ricinusöl dem Prozess in Mengen von 10 - 80 Gew.-%, bezogen auf die Endproduktmenge, zugesetzt werden. Man erhält Polyetheresterpolyole oder Polyetheresteramidpolyole, in deren Struktur die Öle vollständig eingebaut sind, so dass sie im Endprodukt nicht mehr oder nur in sehr geringen Mengen nachgewiesen werden können. Überraschenderweise ergeben auch Öle ohne Hydroxygruppen bei dieser Verfahrensvariante homogene Endprodukte.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid oder eine Mischung aus 100 bis 91 Gew.-% Propylenoxid und 0 bis 9 Gew.-% Ethylenoxid (bezogen auf die eingesetzte Epoxidmenge) eingesetzt, besonders bevorzugt wird ausschließlich Propylenoxid eingesetzt. Die verschiedenen Alkylenoxide können im Gemisch oder blockweise dosiert werden. Produkte mit Ethylenoxidendblöcken sind beispielsweise durch erhöhte Konzentrationen an primären Endgruppen gekennzeichnet, welche den Systemen eine für manche Anwendungen erwünschte erhöhte Isocyanatreaktivität verleihen. Ganz besonders bevorzugt wird reines Propylenoxid eingesetzt.

Die alkalischen Rohpolyole weisen im Allgemeinen OH-Zahlen von 20 bis 1.000 mg KOH/g, bevorzugt OH-Zahlen von 28 bis 700 mg KOH / g auf.

Die nach dem erfindungsgemäßen Verfahren erhältlichen Polyole können als Ausgangskomponenten für die Herstellung von massiven oder geschäumten Polyurethanwerkstoffen sowie von Polyurethanelastomeren eingesetzt werden. Die Polyurethanwerkstoffe und -elastomere können auch Isocyanurat-, Allophanat- und Biuretstruktureinheiten enthalten. Ebenfalls möglich ist die Herstellung sogenannter Isocyanat-Prepolymere, bei deren Herstellung ein molares Verhältnis von Isocyanatgruppen zu Hydroxygruppen von größer 1 verwendet wird, so dass das Produkt freie Isocyanatfunktionalitäten enthält. Diese werden erst bei der Herstellung des eigentlichen Endproduktes in einem oder mehreren Schritten umgesetzt.

Zur Herstellung solcher Materialien bzw. Umsetzungsprodukte werden die erfindungsgemäßen Polyole gegebenenfalls mit weiteren isocyanatreaktiven Komponenten gemischt und mit organischen Polyisocyanaten, gegebenenfalls in Gegenwart von Treibmitteln in Gegenwart von Katalysatoren, gegebenenfalls in Gegenwart anderer Zusatzstoffe wie z. B. Zellstabilisatoren, zur Reaktion gebracht.

### Beispiele

### Eingesetzte Rohstoffe:

### Irganox^{®} 1076: Octadecyl-3-(3,5-di-tert.butyl-4-hydroxyphenyl)propionat

### Die Bestimmung der OH-Zahlen erfolgte gemäß der Vorschrift der DIN 53240.

Die Bestimmung der Trübungswerte erfolgte gemäß der Methode 180.1 der US-Umweltschutzbehörde USEPA (United States Environmental Protection Agency). Die Maßeinheit sind NTUs (nephelometric turbidity units).

Die Bestimmung der Viskosität erfolgte nach DIN ISO 3219.

### Beispiel 1

In einen 10 1 Laborautoklaven wurden unter Stickstoffatmosphäre 1046,1 g Ethylendiamin gegeben. Restsauerstoff wurde nach Schließen des Befüllstutzens durch dreimaliges Befüllen des Autoklaven mit 3 bar Stickstoff und anschließendes Ablassen des Überdrucks auf Atmosphärendruck entfernt. Man erwärmte unter Rühren (450 U / min) auf 150 °C und dosierte 3711,5 g Propylenoxid über einen Zeitraum von 3 h in den Autoklaven. Man ließ 1 h nachreagieren und kühlte sodann auf 80°C ab. Nach Zugabe von 2,815 g einer 44,82 Gew.-%igen wässrigen Lösung von KOH wurde das Wasser über einen Zeitraum von 1 h bei 150 °C im Vakuum (20 mbar) durch Strippen mit Stickstoff (50 ml / min) entfernt. Anschließend wurden 1244,2 g Propylenoxid über einen Zeitraum von 2,5 h eindosiert. Es schloss sich eine Nachreaktionszeit von 1,5 h Dauer an. Nach einer Ausheizzeit von 30 min im Vakuum bei 15 mbar und Abkühlen auf Raumtemperatur wurden dem Ansatz vier Anteile zu etwa jeweils 1300 g des resultierenden Reaktionsgemisches für Neutralisationsversuche (Beispiele 1A bis 1D) entnommen. Die Katalysatorkonzentration (KOH) im resultierenden Reaktionsgemisch betrug 210 ppm.

### Beispiel 1A (Vergleich)

1305,2 g des resultierenden Reaktionsgemisches aus Beispiel 1 wurden bei 80 °C mit 2,028 g 11,82 %iger Schwefelsäure, entsprechend 0,50 mol Schwefelsäure pro mol KOH, versetzt und 1 h bei 80 °C verrührt. Nach Zugabe von 0,88 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 0,45 NTU auf.

### Beispiel 1B (Vergleich)

1307,6 g des resultierenden Reaktionsgemisches aus Beispiel 1 wurden bei 80 °C mit 4,064 g 11,82 %iger Schwefelsäure, entsprechend 1,00 mol Schwefelsäure pro mol KOH, versetzt und 1 h bei 80 °C verrührt. Nach Zugabe von 0,885 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 1,54 NTU auf.

### Beispiel 1C

1307,3 g des resultierenden Reaktionsgemisches aus Beispiel 1 wurden bei 80 °C mit 2,981 g 10,35 %iger Salpetersäure, entsprechend 1,00 mol Salpetersäure pro mol KOH, versetzt und 1 h bei 80 °C verrührt. Nach Zugabe von 0,880 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 0,29 NTU auf.

### Beispiel 1D

1309,5 g des resultierenden Reaktionsgemisches aus Beispiel 1 wurden bei 80 °C mit 2,416 g 20,35 %iger Perchlorsäure, entsprechend 1,00 mol Perchlorsäure pro mol KOH, versetzt und 1 h bei 80 °C verrührt. Nach Zugabe von 0,880 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 0,35 NTU auf.

### Beispiel 2

In einen 10 1 Laborautoklaven wurden unter Stickstoffatmosphäre 1049 g Ethylendiamin gegeben. Restsauerstoff wurde nach Schließen des Befüllstutzens durch dreimaliges Befüllen des Autoklaven mit 3 bar Stickstoff und anschließendes Ablassen des Überdrucks auf Atmosphärendruck entfernt. Man erwärmte unter Rühren (450 U / min) auf 150 °C und dosierte 3735 g Propylenoxid über einen Zeitraum von 3 h in den Autoklaven. Man ließ 1 h nachreagieren und kühlte sodann auf 80°C ab. Nach Zugabe von 6,922 g einer 44,82 Gew.-%igen wässrigen Lösung von KOH wurde das Wasser über einen Zeitraum von 1 h bei 150 °C im Vakuum (20 mbar) durch Strippen mit Stickstoff (50 ml / min) entfernt. Anschließend wurden 1252,2 g Propylenoxid über einen Zeitraum von 1 h eindosiert. Es schloss sich eine Nachreaktionszeit von 1,5 h Dauer an. Nach einer Ausheizzeit von 30 min im Vakuum bei 15 mbar und Abkühlen auf Raumtemperatur wurden dem Ansatz vier Anteile des resultierenden Reaktionsgemisches in Mengen von etwa 1180 g bis etwa 1450 g fürNeutralisationsversuche (Beispiele 2A bis 2D) entnommen. Die Katalysatorkonzentration (KOH) des resultierenden Reaktionsgemisch betrug 510 ppm.

### Beispiel 2A (Vergleich)

1183,5 g des resultierenden Reaktionsgemisches aus Beispiel 2 wurden bei 80 °C mit 4,509 g 11,82 %iger Schwefelsäure, entsprechend 0,51 mol Schwefelsäure pro mol KOH, versetzt und 1 h bei 80 °C verrührt. Nach Zugabe von 0,792 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 1,61 NTU auf.

### Beispiel 2B (Vergleich)

1179,3 g des resultierenden Reaktionsgemisches aus Beispiel 2 wurden bei 80 °C mit 8,971 g 11,82 %iger Schwefelsäure, entsprechend 1,00 mol Schwefelsäure pro mol KOH, versetzt und 1 h bei 80 °C verrührt. Nach Zugabe von 0,799 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 2,39 NTU auf.

### Beispiel 2C

1450,8 g des resultierenden Reaktionsgemisches aus Beispiel 2 wurden bei 80 °C mit 8,159 g 10,35 %iger Salpetersäure, entsprechend 1,00 mol Salpetersäure pro mol KOH, versetzt und 1 h bei 80 °C verrührt. Nach Zugabe von 0,976 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 0,91 NTU auf.

### Beispiel 2D

1452,0 g des resultierenden Reaktionsgemisches aus Beispiel 2 wurden bei 80 °C mit 6,603 g 10,35 %iger Perchlorsäure, entsprechend 1,00 mol Perchlorsäure pro mol KOH, versetzt und 1 h bei 80 °C verrührt. Nach Zugabe von 0,980 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 0,78 NTU auf.

### Beispiel 3

In einen 10 1 Laborautoklaven wurden unter Stickstoffatmosphäre 1025,2 g Ethylendiamin gegeben. Restsauerstoff wurde nach Schließen des Befüllstutzens durch dreimaliges Befüllen des Autoklaven mit 3 bar Stickstoff und anschließendes Ablassen des Überdrucks auf Atmosphärendruck entfernt. Man erwärmte unter Rühren (450 U / min) auf 150 °C und dosierte 3725,7 g Propylenoxid über einen Zeitraum von 3 h in den Autoklaven. Man ließ 1 h nachreagieren und kühlte sodann auf 80°C ab. Nach Zugabe von 13,668 g einer 44,82 Gew.-%igen wässrigen Lösung von KOH wurde das Wasser über einen Zeitraum von 1 h bei 150 °C im Vakuum (20 mbar) durch Strippen mit Stickstoff (50 ml / min) entfernt. Anschließend wurden 1249,1 g Propylenoxid über einen Zeitraum von 1 h eindosiert. Es schloss sich eine Nachreaktionszeit von 1,5 h Dauer an. Das alkalische Rohprodukt wurde danach noch 30 min. bei 150°C im Vakuum bei 15 mbar von flüchtigen Anteilen befreit. Nach Abkühlen auf Raumtemperatur wurden dem Ansatz drei Anteile des resultierenden Reaktionsgemisches von jeweils etwa 1300 g für Neutralisationsversuche (Beispiele 3A bis 3C) entnommen. Die Katalysatorkonzentration (KOH) betrug 1020 ppm.

### Beispiel 3A (Vergleich)

1327,4 g des resultierenden Reaktionsgemisches aus Beispiel 3 wurden bei 80 °C mit 9,969 g 11,87 %iger Schwefelsäure, entsprechend 0,50 mol Schwefelsäure pro mol KOH, versetzt und 1 h bei 80 °C verrührt. Nach Zugabe von 0,891 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 2,34 NTU auf.

### Beispiel 3B (Vergleich)

1299,8 g des resultierenden Reaktionsgemisches aus Beispiel 3 wurden bei 80 °C mit 19,532 g 11,87 %iger Schwefelsäure, entsprechend 1,00 mol Schwefelsäure pro mol KOH, versetzt und 1 h bei 80 °C verrührt. Nach Zugabe von 0,891 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 4,30 NTU auf.

### Beispiel 3C

1302,3 g des resultierenden Reaktionsgemisches aus Beispiel 3 wurden bei 80 °C mit 11,988 g 20,35 %iger Perchlorsäure, entsprechend 1,00 mol Perchlorsäure pro mol KOH, versetzt und 1 h bei 80 °C verrührt. Nach Zugabe von 0,875 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 1,01 NTU auf.

### Beispiel 4

In einen 10 Laborautoklaven wurden unter Stickstoffatmosphäre 762,4 g Ethylendiamin gegeben. Restsauerstoff wurde nach Schließen des Befüllstutzens durch dreimaliges Befüllen des Autoklaven mit 3 bar Stickstoff und anschließendes Ablassen des Überdrucks auf Atmosphärendruck entfernt. Man erwärmte unter Rühren (450 U / min) auf 150 °C und dosierte 2763,8 g Propylenoxid über einen Zeitraum von 3 h in den Autoklaven. Man ließ 1 h nachreagieren und kühlte sodann auf 80 °C ab. Nach Zugabe von 6,758 g einer 44,82 Gew.-%igen wässrigen Lösung von KOH wurde das Wasser über einen Zeitraum von 1 h bei 150 °C im Vakuum (20 mbar) durch Strippen mit Stickstoff (50 ml / min) entfernt. Anschließend wurden 2473,7 g Propylenoxid über einen Zeitraum von 2,5 h eindosiert. Es schloss sich eine Nachreaktionszeit von 1,5 h Dauer an. Anschließend wurde noch 30 min. bei 150 °C im Vakuum bei 15 mbar von flüchtigen Anteilen befreit. Die Katalysatorkonzentration (KOH) im resultierenden Reaktionsgemisch betrug 506 ppm.

### Beispiel 4A

1844,1 g des resultierenden Reaktionsgemisches aus Beispiel 4 wurden bei 80 °C mit 8,228 g 20,35 %iger Perchlorsäure, entsprechend 1 mol Perchlorsäure pro mol KOH versetzt und 1 h bei 80 °C verrührt. Nach Zugabe von 1,250 g Irganox^{®} 1076 wurde das Produkt 1 h bei 18 mbar (Wasserstrahlvakuum) und anschließend bei 110 °C und 1 mbar 3 h entwässert. Das Produkt wies eine Trübung von 0,54 NTU auf.

### Beispiel 5 (Vergleich)

In einen 10 1 Laborautoklaven wurden unter Stickstoffatmosphäre 763,1 g Ethylendiamin gegeben. Restsauerstoff wurde nach Schließen des Befüllstutzens durch dreimaliges Befüllen des Autoklaven mit 3 bar Stickstoff und anschließendes Ablassen des Überdrucks auf Atmosphärendruck entfernt. Man erwärmte unter Rühren (450 U / min) auf 150 °C und dosierte 2766,3 g Propylenoxid über einen Zeitraum von 3 h in den Autoklaven. Man ließ 1 h nachreagieren und kühlte sodann auf 80 °C ab. Nach Zugabe von 50,22 g einer 44,82 Gew.-%igen wässrigen Lösung von KOH wurde das Wasser über einen Zeitraum von 1 h bei 150 °C im Vakuum (20 mbar) durch Strippen mit Stickstoff (50 ml / min) entfernt. Anschließend wurden 2476,0 g Propylenoxid über einen Zeitraum von 2,0 h eindosiert. Es schloss sich eine Nachreaktionszeit von 1,5 h Dauer an. Nach Abkühlen auf 80 °C wurden zunächst 540 g Wasser, dann 165,8 g 11,87 %ige Schwefelsäure zugegeben. Nach 0,5 h Rühren bei 80 °C wurden 4,02 g IRGANOX^{®} 1076 zugegeben, das Wasser abdestilliert und der Rückstand 3 h im Vakuum (1 mbar) bei 110 °C von flüchtigen Anteilen befreit. Nach Filtration über ein Tiefenfilter (T 750) bei 80 °C erhielt man ein klares Produkt.

Die Ergebnisse der Versuche sind in Tab. 1 zusammengefasst.

**Tab. 1**

| **Beispiel** | **Gemessene OH-Zahl [mg KOH / g]** | **Trübung [NTU]** |
|---|---|---|
| 1 A (Vergleich) | 626 | 0,45 |
| 1 B (Vergleich | 625 | 1,54 |
| 1 C | 625 | 0,29 |
| 1 D | 625 | 0,35 |
| 2 A (Vergleich) | 624 | 1,61 |
| 2 B (Vergleich) | 624 | 2,39 |
| 2 C | 623 | 0,91 |
| 2 D | 624 | 0,78 |
| 3 A (Vergleich) | 622 | 2,34 |
| 3 B (Vergleich) | 620 | 4,30 |
| 3 C | 621 | 1,01 |
| 4 A | 470 | 0,54 |
| 5 (Vergleich) | 471 | n. b. |

| | | |
|---|---|---|
| n.b. = nicht bestimmt | | |

### Herstellung von MDI-Präpolymeren aus den gemäß Beispiel 4A und 5 erhaltenen Polyolen

Polymeres MDI-Gemisch: Das in den nachfolgenden Beispielen eingesetzte polymere MDI-Gemisches bestand aus 44 Gew.-% monomerem Diphenylmethandiisocyanat (MDI) und zu 56 Gew.-% aus polymerem MDI. Der Anteil an monomerem MDI setzte sich zusammen aus 96 Gew.-% 4,4'-MDI und zu 4 Gew.-% aus 2,4'-MDI.

### Beispiel 6

95,95 Gew.-Teile eines polymeren MDI-Gemisches wurden mit 4,05 Gew.-Teilen des Polyethers gemäß Beispiel 4A innerhalb von 2 h bei 80°C umgesetzt. Nach Abkühlen auf 21°C erhielt man ein Präpolymer mit einem NCO-Gehalt von 27,3 Gew.-% und einer Viskosität 2800 mPas bei 25°C. Anschließend wurde das Präpolymer 5 Tage bei 21°C gelagert und die Viskosität erneut bestimmt. Die Viskosität nach Lagerung betrug 24360 mPas bei 25°C. Damit nahm die Viskosität innerhalb von 5 Tagen Lagerung bei 21°C um den Faktor 8,7 zu.

### Beispiel 7 (Vergleich)

95,96 Gew.-Teile eines polymeren MDI-Gemisches wurden mit 4,04 Gew.-Teilen des Polyethers gemäß Vergleichsbeispiel 5 innerhalb von 2 h bei 80°C umgesetzt. Nach Abkühlen auf 21°C erhielt man ein Präpolymer mit einem NCO-Gehalt von 27,1 Gew.-% und einer Viskosität 4100 mPas bei 25°C.
Anschließend wurde das Präpolymer 5 Tage bei 21°C gelagert und die Viskosität erneut bestimmt. Die Viskosität nach Lagerung betrug 164000 mPas bei 25°C. Damit nahm die Viskosität innerhalb von 5 Tagen Lagerung bei 21°C um den Faktor 40 zu.

Die erfindungsgemäßen Polyole weisen deutlich geringere Trübungswerte auf als die Polyole der Vergleichsbeispiele. Darüber weist ein aus einem erfindungsgemäßen Polyol hergestelltes Isocyanat-Gruppen haltiges Präpolymer (Beispiel 6) eine höhere Lagerstabilität auf als ein entsprechendes Präpolymer (Vergleichsbeispiel 7) basierend auf einem Polyol hergestellt gemäß Vergleichsbeispiel 5.

## Patentansprüche

1. Verfahren zur Herstellung von Polyolen **dadurch gekennzeichnet, dass**
(i) Alkylenoxide mit Ausnahme von Ethylenoxid oder maximal 9 Gew.-% Ethylenoxid enthaltende Alkylenoxidgemische an aminogruppenhaltige Starterverbindungen addiert werden in Gegenwart eines Katalysators ausgewählt aus mindestens einem der Gruppe bestehend aus Alkalimetallhydroxid, Alkalimetallhydrid, Erdalkalimetallhydrid, Alkalimetallcarboxylat, Erdalkalimetallcarboxylat und Erdalkalihydroxid,
(ii) anschließend die basischen Katalysatorreste durch Zugabe der stöchiometrischen Menge einer oder mehrerer einbasischer anorganischer Säuren ausgewählt aus Perchlorsäure und / oder Salpetersäure neutralisiert werden und
(iii) die hierbei entstehenden Salze im resultierenden Polyol belassen werden.

2. Verfahren gemäß Anspruch 1, bei dem vor oder während der Addition der Alkylenoxide 10 bis 80 Gew.-%, bezogen auf die Endproduktmenge, Triglyceride zugesetzt werden.

3. Verfahren gemäß einem oder mehreren der Ansprüche 1 bis 2, wobei im Schrift (i) Propylenoxid oder eine Mischung aus 100 bis 91 Gew.-% Propylenoxid und 0 bis 9 Gew.-% Ethylenoxid an aminogruppenhaltige Starterverbindungen addiert werden in Gegenwart eines Katalysators ausgewählt aus mindestens einem der Gruppe bestehend aus Alkalimetallhydroxid, Alkalimetallhydrid, Erdalkalimetallhydrid, Alkalimetallcarboxylat, Erdalkalimetallcarboxylat und Erdalkalihydroxid.

4. Polyol, erhältlich gemäß einem oder mehreren der Ansprüche 1 bis 3.

5. Verwendung der Polyole gemäß Anspruch 4 zur Herstellung von Polyurethanen.

## Claims

1. Method for producing polyols, **characterised in that**
(i) alkylene oxides other than ethylene oxide or alkylene oxide mixtures containing a maximum of 9 wt.% of ethylene oxide are added to amino group-containing starter compounds in the presence of a catalyst selected from at least one of the group consisting of alkali metal hydroxide, alkali metal hydride, alkaline-earth metal hydride, alkali metal carboxylate, alkaline-earth metal carboxylate and alkaline-earth metal hydroxide,
(ii) then the basic catalyst residues are neutralised by adding the stoichiometric amount of one or more monobasic inorganic acids selected from perchloric acid and/or nitric acid and
(iii) the salts formed are left in the resulting polyol.

2. Method according to claim 1, wherein 10 to 80 wt.%, relative to the amount of end product, of triglycerides are added before or during addition of the alkylene oxides.

3. Method according to one or more of claims 1 to 2, wherein in step (i) propylene oxide or a mixture of 100 to 91 wt.% of propylene oxide and 0 to 9 wt.% of ethylene oxide is added to amino group-containing starter compounds in the presence of a catalyst selected from at least one of the group consisting of alkali metal hydroxide, alkali metal hydride, alkaline-earth metal hydride, alkali metal carboxylate, alkaline-earth metal carboxylate and alkaline-earth metal hydroxide.

4. Polyol obtainable according to one or more of claims 1 to 3.

5. Use of the polyols according to claim 4 to produce polyurethanes.

## Revendications

1. Procédé de fabrication de polyols, **caractérisé en ce que**
(i) des oxydes d'alkylène à l'exception de l'oxyde d'éthylène ou des mélanges d'oxydes d'alkylène contenant au plus 9 % en poids d'oxyde d'éthylène sont additionnés sur des composés de départ contenant des groupes amino en présence d'un catalyseur choisi parmi au moins un du groupe constitué par un hydroxyde de métal alcalin, un hydrure de métal alcalin, un hydrure de métal alcalino-terreux, un carboxylate de métal alcalin, un carboxylate de métal alcalino-terreux et un hydroxyde de métal alcalino-terreux,
(ii) puis les résidus de catalyseur basiques sont neutralisés par ajout de la quantité stoechiométrique d'un ou de plusieurs acides inorganiques monobasiques choisis parmi l'acide perchlorique et/ou l'acide nitrique, et
(iii) les sels ainsi formés sont laissés dans le polyol résultant.

2. Procédé selon la revendication 1, dans lequel 10 à 80 % en poids, par rapport à la quantité de produit final, de triglycérides sont ajoutés avant ou pendant l'addition des oxydes d'alkylène.

3. Procédé selon une ou plusieurs des revendications 1 à 2, dans lequel, à l'étape (i), de l'oxyde de propylène ou un mélange de 100 à 91 % en poids d'oxyde de propylène et 0 à 9 % en poids d'oxyde d'éthylène est additionné sur des composés de départ contenant des groupes amino en présence d'un catalyseur choisi parmi au moins un du groupe constitué par un hydroxyde de métal alcalin, un hydrure de métal alcalin, un hydrure de métal alcalino-terreux, un carboxylate de métal alcalin, un carboxylate de métal alcalino-terreux et un hydroxyde de métal alcalino-terreux.

4. Polyol, pouvant être obtenu selon une ou plusieurs des revendications 1 à 3.

5. Utilisation des polyols selon la revendication 4 pour la fabrication de polyuréthanes.
